# FASCICULE DE BREVET EUROPEEN

(11) **EP 3 105 034 B1**
(45) Date de publication et mention de la délivrance du brevet: **04.04.2018**
(21) Numéro de dépôt: 15704262.3
(22) Date de dépôt: 04.02.2015
(51) Int. Cl.: B29C 49/58, B29C 49/48, B29C 49/06, B29C 49/12, B29C 49/36, B29L 31/00

(54) **UNITÉ DE MOULAGE POUR LA FABRICATION DE RÉCIPIENTS À PARTIR DE PRÉFORMES EN MATIÈRE PLASTIQUE**
FORMEINHEIT ZUR HERSTELLUNG VON BEHÄLTERN AUS VORFORMLINGEN AUS KUNSTSTOFFMATERIAL
MOULDING UNIT FOR MANUFACTURING CONTAINERS FROM PREFORMS MADE OF PLASTICS MATERIAL

(30) Priorité: 13.02.2014 FR 1451118
(43) Date de publication de la demande: 21.12.2016
(73) Titulaire: Sidel Participations, 76930 Octeville-sur-Mer (FR)
(72) Inventeur: LEMAIRE, Cédric, F-76930 Octeville sur Mer (FR); ALIX, Olivier, F-76930 Octeville sur Mer (FR); BRACHAIS, Frédéric, F-76930 Octeville sur Mer (FR)
(74) Mandataire: Grassin d'Alphonse, Emmanuel Jean Marie
(86) Numéro de dépôt international: PCT/EP2015/052262
(87) Numéro de publication internationale: WO 2015/121120

(56) Documents cités:
- DE-A1-102008 025 775
- US-A1- 2010 143 531
- US-A1- 2010 159 058
- US-B1- 6 464 486
- US-B2- 8 192 656

## Description

La présente invention concerne une unité de moulage pour la fabrication de récipients à partir de préformes en matière plastique.

La présente invention concerne plus particulièrement une unité de moulage pour la fabrication de récipients par soufflage ou par étirage-soufflage à partir de préformes en matière plastique comportant un col muni d'un buvant délimitant circonférentiellement une ouverture d'accès à l'intérieur de ladite préforme.

On connait de l'état de la technique de telles unités de moulage montées sur une machine de fabrication de récipients par soufflage ou par étirage-soufflage à partir de préformes en matière plastique, telle que du PET.

Les machines de fabrication sont notamment, mais non exclusivement, de conception « rotative » et comportent un carrousel qui est circonférentiellement pourvu d'un nombre donné d'unités de moulage de récipients.

La fabrication de récipients en matière plastique, tels que des bouteilles, flacons, pots, etc., y est effectuée à partir de préformes qui, préalablement fabriquées par moulage par injection de matière plastique, sont ultérieurement chauffées dans un four de conditionnement thermique. En variante, les préformes sont fabriquées par extrusion puis directement transformées en récipients dans l'unité de moulage.

Dans une machine de fabrication « rotative », chaque unité de moulage comporte au moins un moule qui est généralement de conception dite en « portefeuille », ledit moule étant respectivement constitué de deux demi-moules supportés par deux porte-moules, dont l'un au moins est monté mobile par rapport à l'autre autour d'un axe de rotation, notamment d'orientation verticale.

Dans la suite de la présente description, le terme « préforme » est utilisé de manière générique et englobe également à ce titre un récipient intermédiaire ayant subi au moins un soufflage préalable, avec ou sans étirage.

En phase de fabrication, selon le nombre d'empreinte du moule, une ou plusieurs préforme(s) sont amenée(s) à la machine (encore appelée « souffleuse ») pour être introduite(s) dans le moule de l'une des unités de moulage auquel sont associés des moyens de formage par application d'au moins un fluide sous pression, gazeux et/ou liquide.

Le formage (ou mise en forme) de la préforme chaude est généralement obtenu par soufflage ou par étirage-soufflage au moyen d'au moins un fluide sous pression, gazeux et/ou liquide, tel que de l'air à une pression comprise entre 20 et 40 bars.

Les moyens de formage associés au moule de l'unité sont par exemple réalisés sous la forme d'une tuyère de soufflage.

Le document FR-A-2.764.544 décrit un exemple de tuyère de soufflage et on s'y reportera pour de plus amples détails sur le fonctionnement général d'une tuyère.

Dans une unité de moulage comportant au moins un moule associé à une tuyère de soufflage, il est encore connu d'utiliser un stabilisateur, par exemple formé par un insert monté mobile axialement relativement au nez de tuyère et logé au moins en partie à l'intérieur dudit nez de tuyère.

Le stabilisateur a pour fonction d'assurer un positionnement correct de la préforme dans le moule avant de procéder à sa transformation par soufflage ou étirage soufflage dans le moule.

On se reportera par exemple au document EP-2.117.807 pour de plus amples détails quant à l'utilisation d'un insert constituant un tel stabilisateur.

Tel qu'expliqué dans ce document, les défauts de positionnement de la préforme sont parfois consécutifs à des phénomènes de rebonds survenant lors de la mise en place de la préforme dans le moule.

Le rebond de la préforme par rapport à la face supérieure du moule conduit au fait que, dans certain cas, la préforme n'a pas le temps de se recentrer en tombant dans l'orifice de la face supérieure du moule, avant que la tuyère ne vienne la recouvrir.

Plus généralement, le mauvais positionnement de la préforme dans le moule peut aussi résulter d'un phénomène de balancement de la préforme qui dépend notamment du type de préforme (dimensions du corps, etc.), des moyens de transfert utilisés pour amener la préforme dans le moule de l'unité de moulage.

Dans de telles circonstances, la tuyère coince la préforme dans une position désaxée dans laquelle la préforme est soufflée et transformée en un récipient mal formé, généralement visuellement inesthétique et souvent impropre au remplissage et au bouchage.

Selon une caractéristique importante, la présente invention concerne la fabrication de récipients en matière plastique qui, dits de type « HR », sont d'un genre bien particulier et sont caractérisés par le fait de présenter des propriétés de résistance à la chaleur permettant leur remplissage à chaud.

Les moules servant à la fabrication de tels récipients particuliers, comme les récipients eux-mêmes, sont généralement désignés par ces lettres « HR » correspondant à l'acronyme des termes anglais « *Heat Résistant* ».

En effet, pour accroître la résistance de la matière plastique aux déformations induites par l'élévation de température lors d'un remplissage à chaud, une solution consiste à accroître de manière thermique la cristallinité de la matière.

Pour ce faire, l'unité de moulage comporte des moyens de chauffe associés, tels qu'un fluide caloporteur ou des éléments résistifs, qui sont intégrés au moule pour en chauffer l'empreinte formée dans la paroi interne du moule, par exemple à une température relativement élevée qui est supérieure à 100°C et généralement de l'ordre de 130°C à 160°C.

En fin de soufflage, le récipient est maintenu en contact pendant une durée déterminée avec la paroi chaude du moule et un accroissement de cristallinité de la matière est alors obtenu grâce au transfert de chaleur survenant entre la paroi chaude et le récipient. Cette technique est encore appelée thermofixation (« *heat set* » en anglais).

Le document WO-2013/093335 décrit, à titre non limitatif, un exemple d'un moule pour le formage de tels récipients de type « HR », le moule comportant des moyens de chauffe électrique formés par des éléments résistifs.

On se reportera avantageusement à ce document pour de plus amples détails sur les moules de type « HR ».

Dans le cas particulier d'une fabrication de récipients de type « HR », le stabilisateur équipant la tuyère de soufflage comporte des moyens de blocage qui sont destinés à être introduits à l'intérieur du col de la préforme et qui ont pour fonction, en y demeurant après le formage du récipient, de faciliter la libération du récipient final en le maintenant en position.

En effet, lorsque les demi-moules s'écartent radialement lors de l'ouverture du moule, il peut arriver qu'une partie de la surface externe de la paroi du récipient formé adhère à la paroi interne chaude de l'empreinte du demi-moule.

C'est la raison pour laquelle dans une application de type « HR », le stabilisateur est avantageusement pourvu de tels moyens de blocage qui coopèrent avec le col pour maintenir le récipient en position.

Les moyens de blocage coopèrent par exemple avec la paroi cylindrique interne du col pour immobiliser radialement le récipient.

Grâce à quoi, le récipient est maintenu en position lorsque les demi-moules, pivotant autour de l'axe de rotation du moule, s'écartent radialement l'un de l'autre depuis la position fermée jusqu'à la position ouverte et occupe une position fixe déterminée pour être extrait par des moyens de transfert.

En position ouverte du moule, le récipient fabriqué est en effet extrait hors du moule par l'intermédiaire de moyens de transfert, tels qu'une pince assurant une préhension externe du récipient par son col.

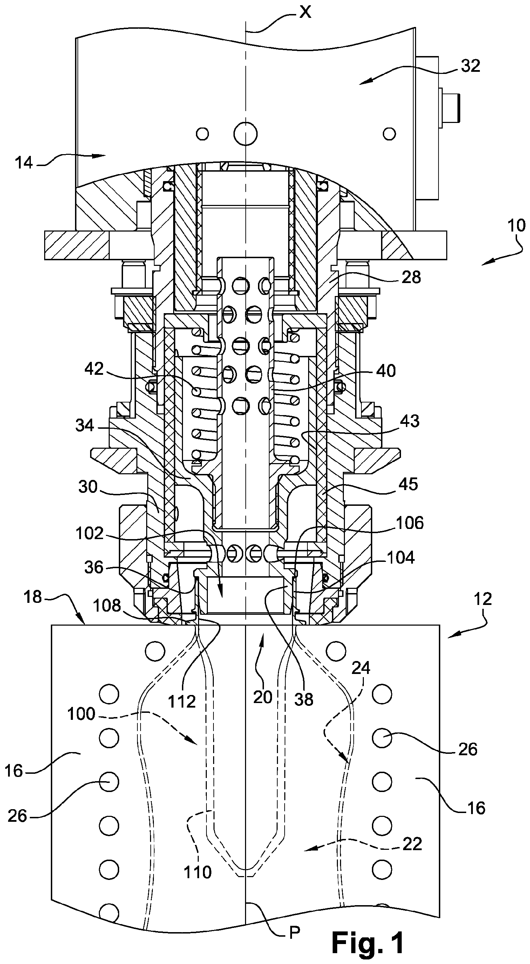

On a représenté à la figure 1 un exemple de réalisation d'une unité 10 de moulage pour la fabrication de récipients de type « HR » afin d'illustrer l'état de la technique connu de la Demanderesse.

La figure 1 représente plus particulièrement l'une des unités 10 de moulage d'une machine de fabrication de récipients de type « HR », ladite unité 10 de moulage comportant principalement un moule 12 de type « HR » et une tuyère 14 associée audit moule 12.

Le moule 12 de type « HR » comporte au moins deux demi-moules 16 qui sont montés mobiles entre au moins une position ouverte et une position fermée.

Dans l'exemple représenté, le moule 12 est de conception « en portefeuille », l'un au moins des demi-moules 16 étant monté mobile en rotation autour d'un axe de rotation qui s'étend ici par convention suivant l'orientation axiale.

Dans la position fermée représentée sur la figure 1, les demi-moules 16 sont accolés suivant un plan P de joint déterminé par leur face interne respective. Les demi-moules 16 réunis délimitent ensemble une face 18 supérieure du moule 12 qui comporte centralement un orifice 20 débouchant dans une cavité 22 de moulage et correspondant au récipient à fabriquer.

En variante non représentée, le moule 12 est réalisé en trois parties avec un fond de moule destiné au moulage du fond du récipient et complémentaire des demi-moules 16.

L'orifice 20 débouche axialement dans la cavité 22 de moulage qui est, en position fermée, délimitée au moins par une empreinte 24 de moulage ménagée en creux dans la paroi interne de chaque demi-moule 16.

Dans le cas d'un moule 12 de type « HR », chaque empreinte 24 de moulage d'un demi-moule 16 est apte à être chauffée par des moyens 26 de chauffe qui, associés au moule 12 de l'unité 10 de moulage, sont comme le reste de ladite unité 10 représentés schématiquement sur la figure 1.

On a également représenté partiellement sur la figure 1, une préforme 100 en matière plastique destinée à être transformée dans un tel moule 12 par soufflage ou étirage-soufflage en un récipient, tel qu'ici une bouteille, au moyen de la tuyère 14 qui est associée au moule 12 de type « HR ».

La tuyère 14 comporte au moins un corps 28 de tuyère qui est fixe, notamment axialement par rapport au moule 12 de l'unité 10 de moulage.

La tuyère 14 comporte un nez 30 de tuyère qui est monté mobile axialement par rapport audit corps 28 de tuyère, respectivement entre une position relevée au-dessus du moule 12 et une position abaissée de soufflage illustrée à la figure 1.

La tuyère 14 comporte des moyens 32 d'actionnement qui sont aptes à entraîner axialement en déplacement au moins ledit nez 30 de tuyère entre lesdites positions relevée et abaissée.

Dans l'exemple de la figure 1, les moyens 32 d'actionnement sont constitués par au moins un vérin d'actionnement, notamment un vérin pneumatique.

En position abaissée de soufflage, ledit nez 30 de tuyère est en appui contre la face 18 supérieure du moule 12 occupant sa position fermée.

Dans ladite position abaissée de soufflage représentée à la figure 1, le nez 30 de tuyère établit une liaison étanche afin d'introduire par une ouverture d'un col d'une préforme 100 au moins un fluide sous pression à l'intérieur de ladite préforme 100 chaude en matière plastique.

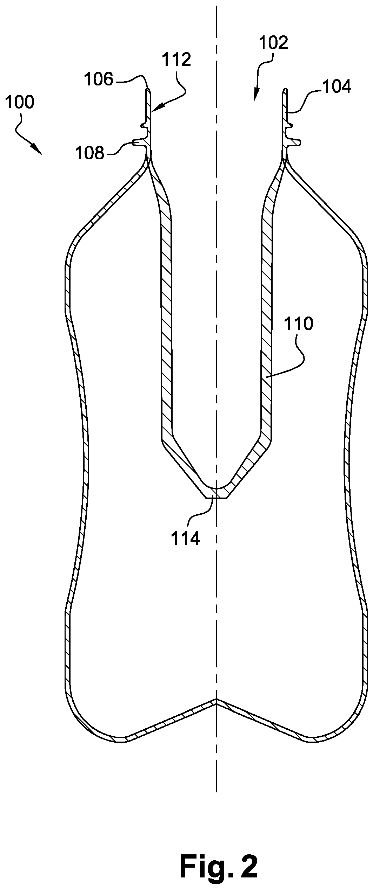

Telle que représentée sur la figure 2 à titre d'exemple non limitatif, la préforme 100 comporte une ouverture 102 délimitée par un col 104, ledit col 104 comportant un bord circulaire supérieur ci-après appelé buvant 106.

Le col 104 comporte une collerette 108 qui s'étend radialement en saillie vers l'extérieur et qui est située axialement la jonction du corps 110 de la préforme avec son col 104.

Le col 104 de la préforme 100 présente sa forme définitive, c'est à dire celle du récipient de sorte que, contrairement au corps 110, le col 104 lui n'est pas chauffé afin de ne pas subir de déformations de nature à en compromettre ultérieurement la coopération avec bouchon pour la fermeture du récipient après remplissage.

En position dans le moule 12 occupant sa position fermée (figure 1), la préforme 100 est en appui par l'intermédiaire de sa collerette 108 contre la face 18 supérieure du moule, plus précisément contre le rebord circulaire, dit bague d'appui, entourant l'orifice 20.

Le col 104 de la préforme 100 s'étend axialement en saillie hors du moule 12, au-dessus de la face 18 supérieure du moule 12 tandis que son corps 110 s'étend en dessous, à l'intérieur de la cavité 22 de moulage du moule 12.

Le corps 110 de la préforme 100 est fermé à son extrémité axialement opposée au col 104 par un fond 114.

La tuyère 14 comporte un stabilisateur 34 destiné à maintenir la préforme 100 dans une position déterminée de référence en vue de sa transformation en récipient.

Le stabilisateur 34 comporte une face 36 d'appui qui est destinée à coopérer avec le buvant 106 du col 104 de la préforme 100 représentée sur la figure 1.

La tuyère 14 représentée à la figure 1 est destinée à être associée à un moule 12 de type « HR ».

C'est la raison pour laquelle, le stabilisateur 34 de la tuyère 14 est muni de moyens 38 de blocage qui sont destinés à être introduits à l'intérieur du col 104 et à coopérer avec la paroi 112 cylindrique interne du col 104 pour maintenir le récipient fabriqué en position, tout particulièrement lors de l'ouverture du moule 12 avant de procéder à son extraction.

Le stabilisateur 34 est logé à l'intérieur du nez 30 de tuyère et forme avec un organe 40 tubulaire d'admission dudit au moins un fluide sous pression un équipage mobile qui, mû avec ledit nez 30 de tuyère, est apte à coulisser axialement relativement audit nez 30 de tuyère.

Le stabilisateur 34 forme avec ledit organe 40 tubulaire d'admission un équipage mobile qui coulisse entre au moins une position haute et une position basse.

L'équipage mobile et plus particulièrement le stabilisateur 34 est rappelé élastiquement vers la position basse par des moyens 42 de rappel associés.

Les moyens 42 de rappel sont par exemple formés par au moins un ressort de compression qui sollicite le stabilisateur 34 axialement vers le bas.

Le stabilisateur 34 est représenté sur la figure 1 en position haute, en présence d'un col 104 de préforme 100 avec le buvant 106 duquel le stabilisateur 34 coopère par l'intermédiaire de sa face 36 d'appui.

En position haute, le ressort 42 de rappel est contraint par la présence du col 104 de la préforme 100 qui provoque le déplacement du stabilisateur 34 de sa position basse vers sa position haute, le ressort 42 de rappel comprimé sollicitant en réaction axialement le stabilisateur 34 en sens opposé, c'est à dire vers le bas.

Le stabilisateur 34 exerce sur le buvant 106 du col 104 en contact avec sa face 36 d'appui, un effort axial fournit par ledit ressort 42 qui, orienté vers le bas, maintient le col 104 en position en plaquant notamment la collerette 108 en appui contre la face 18 supérieure du moule 12.

La présence de moyens 26 de chauffe dans le moule 12 de type « HR » a pour conséquence de créer un environnement particulier sur le plan des conditions thermiques.

En effet, le nez 30 de tuyère est tout particulièrement soumis à des températures élevées, notamment du fait du transfert de chaleur survenant à chaque contact du nez 30 de tuyère avec la face 18 supérieure du moule 12.

Par conséquent le nez 30 de tuyère comme le stabilisateur 34 s'échauffent et cela d'une manière d'autant plus importante que les cadences de fabrication sont élevées.

La face 18 supérieure du moule 12 comme l'air environnant sont à une température élevée très supérieure à la température ambiante, étant rappelé que les moyens 26 de chauffe portent généralement l'empreinte 24 de moulage de chaque demi-moule 16 à une température supérieure à 100°C.

Ces conditions thermiques particulières et propres à la fabrication de récipients de type « HR » influent sur le choix des matériaux et la conception de la tuyère 14 devant être associée à un moule 12 de type « HR ».

C'est ainsi que, le stabilisateur 34 intégré à la tuyère 14 est une pièce qui est réalisée dans un matériau métallique, en raison notamment de l'environnement thermique particulier d'une fabrication de récipients de type « HR ».

Tel que représenté sur la figure 1, le stabilisateur 34 est guidé axialement en coulissement par coopération avec une chemise 45 solidaire du nez 30 de tuyère.

Le stabilisateur 34 comporte un tronçon supérieur dont la surface 43 cylindrique externe coopère avec une surface 47 cylindrique interne de guidage de la chemise 45 qui guide axialement le stabilisateur 34 lors du coulissement entre lesdites positions basse et haute.

Le choix du matériau métallique du stabilisateur 34 est donc déterminé en tenant compte des dilatations qui vont survenir lors de la fabrication des récipients en raison des conditions thermiques précitées et de manière à éviter tout risque de coincement, le stabilisateur 34 devant rester libre de coulisser en étant guidé axialement par la surface 47 cylindrique interne de guidage de la chemise 45.

C'est l'une des raisons pour lesquelles, le stabilisateur 34 d'une tuyère 14 associée à un moule 12 de type « HR » est une pièce réalisée en métal.

L'emploi d'un matériau métallique est donc l'usage pour l'Homme du métier afin de pouvoir garantir une fiabilité de fonctionnement du stabilisateur 34 dans des conditions thermiques propres à une application de type « HR », et notamment la fiabilité du guidage en coulissement axial du stabilisateur 34 dans la chemise 45 du nez 30 de tuyère.

Toutefois, l'utilisation d'un matériau métallique pour la fabrication du stabilisateur 34 n'est pas sans présenter d'inconvénients.

Tout d'abord, le col 104 d'une préforme 100 en général et le buvant 106 en particulier sont aujourd'hui de plus en plus fragiles et ceci en raison de l'allègement constamment recherché du récipient final, lequel se traduit notamment par une réduction de la quantité de matière présente dans le col de la préforme.

Le contact entre le stabilisateur 34 réalisé en métal et le col 104 s'accompagne parfois de chocs qui peuvent provoquer des détériorations du col 104 et tout particulièrement du buvant 106, en raison de la fragilité accrue des cols 104 de préformes d'une part et de la masse du stabilisateur 34 métallique d'autre part.

L'utilisation d'un vérin pneumatique comme moyen 32 d'actionnement du nez 30 de tuyère entre les positions relevée et abaissée participe également à accroître ce risque de détériorations du col 104 en raison de la vitesse de déplacement du nez 30 de tuyère, le contact entre le stabilisateur 34 et le col 104 de la préforme 100 étant parfois rude.

Dans le cas d'une application de type « HR », la présence des moyens 38 de blocage portés par le stabilisateur 34 n'est également pas sans conséquences.

Outre la fiabilité du guidage, le choix d'un matériau métallique pour le stabilisateur 34 s'impose à l'Homme du métier soucieux de prévenir tout risque de rupture d'une partie des moyens 38 de blocage.

Le risque de présence à l'intérieur du récipient de corps étrangers constitués d'une partie du stabilisateur 34 n'est évidemment pas acceptable, en particulier pour une application dans le domaine agro-alimentaire.

Pour l'ensemble des raisons détaillées ci-avant, l'emploi d'un matériau métallique pour la réalisation du stabilisateur 34 s'est toujours imposé à l'Homme du métier dans le cas d'une application à la fabrication de récipients de type « HR ».

Tout au plus, le stabilisateur 34 est-il parfois réalisé en aluminium, et non pas en inox, pour en réduire le poids et ce faisant les risques de détériorations susceptibles d'être causées au col 104 lors de chocs survenant notamment entre les moyens 38 de blocage et la paroi interne 112 du col 104.

Le but de la présente invention est notamment de résoudre les inconvénients de l'état de la technique et de proposer une unité de moulage de type « HR » perfectionnée pour équiper une machine de fabrication de récipients, ladite unité comportant une tuyère qui, associée à un moule, comporte un stabilisateur qui soit avantageusement simple, fiable et économique.

Dans ce but, l'invention propose une unité de moulage pour la fabrication de récipients par soufflage ou par étirage-soufflage à partir de préformes en matière plastique comportant un col muni d'un buvant délimitant circonférentiellement une ouverture d'accès à l'intérieur de ladite préforme, ladite unité de moulage comportant au moins :
- un moule de type « HR » comportant au moins deux demi-moules montés mobiles entre au moins une position ouverte et une position fermée dans laquelle les demi-moules réunis délimitent une face supérieure comportant un orifice débouchant dans une cavité de moulage délimitée au moins par une empreinte de moulage de chaque demi-moule, chaque empreinte de moulage étant apte à être chauffée par des moyens de chauffe associés dudit moule,
- une tuyère comportant au moins un corps de tuyère et un nez de tuyère qui est monté mobile axialement par rapport audit corps de tuyère entre une position relevée au-dessus du moule et une position abaissée de soufflage, ledit nez de tuyère étant commandé axialement en déplacement entre lesdites positions relevée et abaissée par des moyens d'actionnement, et
- un stabilisateur comportant une face d'appui destinée à coopérer avec le buvant du col et des moyens de blocage en position destinés à être introduits à l'intérieur du col, ledit stabilisateur étant logé à l'intérieur du nez de tuyère et formant avec un organe tubulaire d'admission d'au moins un fluide sous pression un équipage mobile qui, mû avec ledit nez de tuyère, est apte à coulisser axialement relativement audit nez de tuyère entre au moins une position haute et une position basse,
caractérisée en ce que l'organe tubulaire est guidé en coulissement axial par rapport au corps de tuyère par au moins un moyen de guidage qui est interposé radialement entre ledit corps de tuyère et ledit organe tubulaire d'admission et en ce que le stabilisateur, fixé audit organe tubulaire, est guidé par rapport au corps de tuyère uniquement par l'intermédiaire dudit au moins un moyen de guidage.

Le fait que le guidage axial du stabilisateur selon l'invention soit obtenu sans qu'aucune partie du stabilisateur lui-même n'intervienne, permet de s'affranchir des contraintes qui existaient jusqu'alors sur le choix du matériau utilisé pour le stabilisateur.

Le stabilisateur présente ainsi circonférentiellement avec le nez de tuyère un jeu radial déterminé qui est propre à en permettre la dilatation thermique, notamment provoquée par la chaleur transmise à la tuyère par le moule de type « HR ».

Avantageusement et par comparaison avec l'état de la technique décrit à la figure 1, le stabilisateur n'est donc plus nécessairement réalisé en métal pour garantir la fiabilité du guidage du stabilisateur dans les conditions thermiques de la fabrication de récipients de type « HR ».

Grâce à la suppression du guidage sur le stabilisateur, il est possible de réaliser le stabilisateur en matière plastique.

La réalisation du stabilisateur en matière plastique permet d'obtenir un allègement substantiel et donc, par comparaison avec la réalisation antérieure en métal, une réduction de la masse du stabilisateur.

Grâce à cet allègement, une augmentation des cadences de fabrication des récipients est avantageusement obtenue, notamment en raison du fait que la vitesse du cycle de descente et remontée du nez de tuyère comportant le stabilisateur peut être accrue.

Avantageusement, l'allègement obtenu en réalisant le stabilisateur en matière plastique est particulièrement favorable à l'utilisation d'un moteur linéaire comme moyens d'actionnement associés au nez de tuyère.

En effet, la réduction de la masse embarquée permet une plus grande liberté dans le choix desdits moyens d'actionnement.

Avantageusement et par comparaison avec un vérin pneumatique utilisé jusqu'alors, le moteur linéaire permet notamment de contrôler avec une plus grande précision le déplacement du nez de tuyère et donc celui du stabilisateur.

Grâce à l'utilisation d'un moteur linéaire, il est possible de faire varier la vitesse, accélération et/ou décélération, au cours du déplacement du nez de tuyère entre les positions relevée et abaissée et par conséquent celle du stabilisateur.

Avantageusement, le moteur linéaire permet de réaliser une décélération en fin de course de sorte que le contact entre le stabilisateur occupant sa position basse et le col d'une préforme soit moins rude qu'auparavant, limitant voire supprimant ainsi les risques d'endommagement des moyens de blocage du stabilisateur ou encore de détérioration du col de la préforme.

Avantageusement, le moteur linéaire offre une facilité et une rapidité d'utilisation lors de son paramétrage (vitesse, etc.), ce qui est tout particulièrement avantageux lors d'un changement de fabrication entre un récipient donné et un autre récipient présentant par exemple un col de dimensions différentes.

Le choix de la matière plastique pour le stabilisateur contribue à réduire les risques de détériorations du col de la préforme, un stabilisateur en matière plastique étant moins abrasif en cas de contact avec une préforme (réalisée en matière plastique telle que le PET) que ne peut, par comparaison, l'être celui d'un stabilisateur en métal.

L'utilisation d'un stabilisateur en matière plastique et d'un moteur linéaire se conjugue avantageusement pour réduire les risques des détériorations du col des préformes transformées en récipients.

Selon d'autres caractéristiques de l'invention :
- le stabilisateur est réalisé en matière plastique ;
- les moyens d'actionnement associés audit nez de tuyère sont constitués par un moteur linéaire ;
- ledit au moins un moyen de guidage est porté par le corps de tuyère ;
- ledit au moins un moyen de guidage est constitué par au moins une paire de bagues de guidage, superposées axialement l'une à l'autre ;
- le stabilisateur est fixé de manière démontable à l'organe tubulaire d'admission par l'intermédiaire de moyens de fixation constitués par au moins un élément déformable élastiquement ;
- la tuyère comporte des moyens de rappel du stabilisateur vers la position basse qui sont agencés axialement au-dessus dudit moyen de guidage ;
- les moyens de rappel sont constitués par un ressort de compression dont l'extrémité supérieure est axialement en appui sur une face radiale d'appui du corps de tuyère ;
- les moyens de rappel sont constitués par un ressort de compression dont l'extrémité inférieure est axialement en appui sur une face radiale d'appui que comporte une collerette annulaire qui est solidaire de l'organe tubulaire d'admission ;
- la tuyère comporte au moins des moyens de butée qui, déterminant la position basse, sont constitués par une face de butée que comporte le nez de tuyère et contre laquelle vient buter un épaulement du stabilisateur.

D'autres caractéristiques et avantages de la présente invention apparaîtront à la lecture de la description détaillée qui va suivre pour la compréhension de laquelle on se reportera aux dessins dans lesquels :
- la figure 1 est une vue en coupe axiale d'une unité de moulage pour une machine de fabrication de récipients de type « HR » qui représente un moule en position fermée comportant une préforme et une tuyère associée en position abaissée de soufflage et qui illustre un stabilisateur selon l'état de la technique en position haute ;
- la figure 2 est une vue en coupe qui représente un exemple d'une préforme en matière plastique destinée à être transformée en un récipient ;

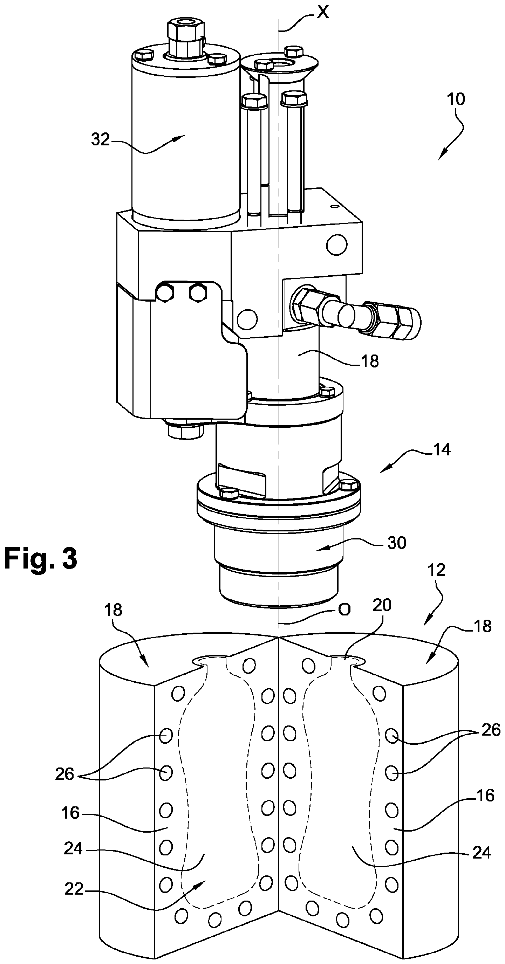

- la figure 3 est une vue en perspective qui représente une unité de moulage pour la fabrication de récipients de type « HR » selon un mode de réalisation de l'invention et qui illustre respectivement une tuyère de ladite unité comportant des moyens d'actionnement formés par un moteur électrique linéaire et un moule occupant sa position ouverte ;

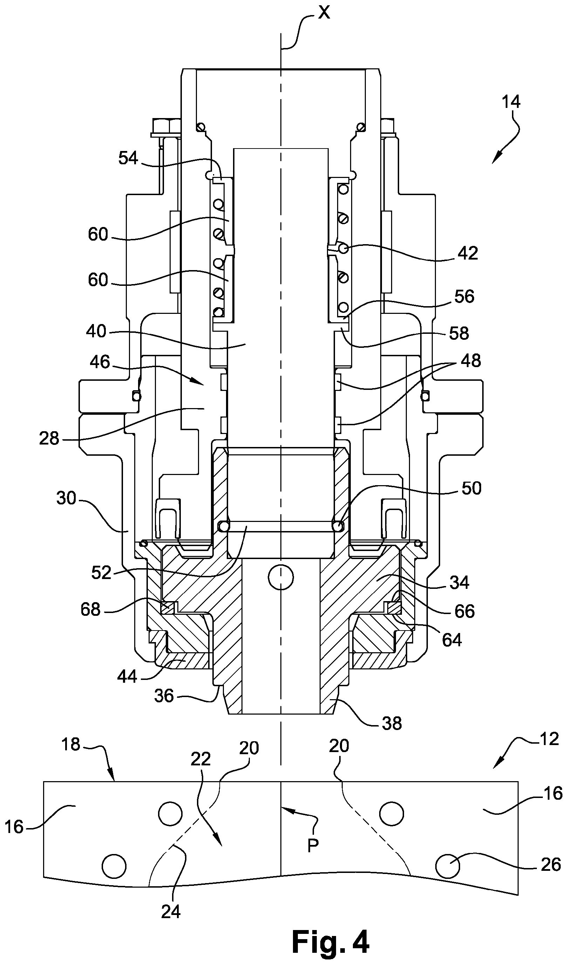

- la figure 4 est une vue d'une unité de moulage selon la figure 3 qui représente en coupe axiale la tuyère en position relevée et qui illustre un stabilisateur réalisé conformément aux enseignements de l'invention et rappelé élastiquement en position basse par un ressort agissant sur l'organe tubulaire ;

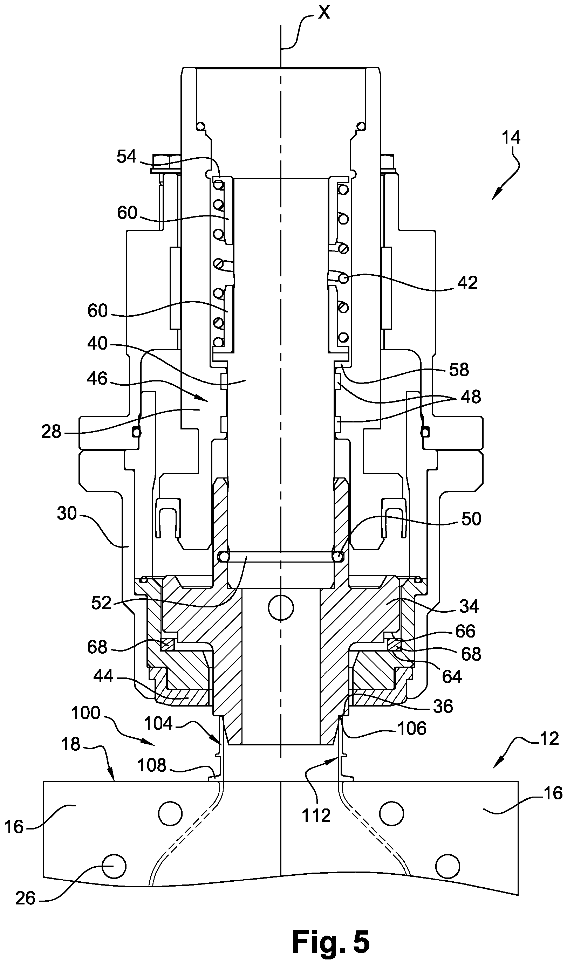

- la figure 5 est une vue en coupe axiale d'une unité de moulage selon la figure 3 qui représente, lors de la descente vers sa position abaissée, une position intermédiaire du nez de tuyère dans laquelle le stabilisateur coopère avec le col d'une préforme en place dans le moule en position fermée ;

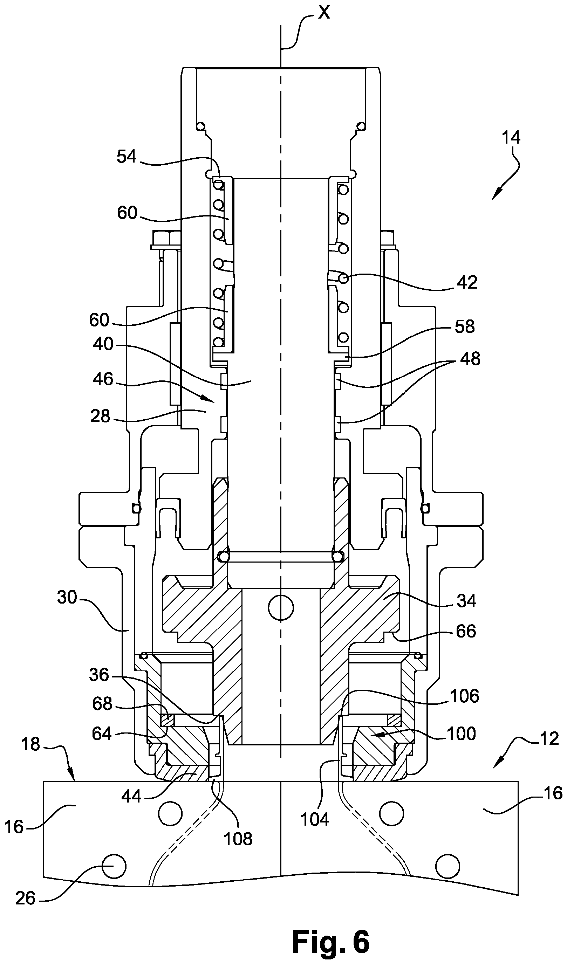

- la figure 6 est une vue en coupe axiale d'une unité de moulage selon la figure 3 qui représente la tuyère en position abaissée de soufflage et le moule en position fermée et qui illustre une préforme maintenue en position par le stabilisateur en position haute et dont le col est coiffé par le nez de tuyère.

Dans la suite de la description, on adoptera à titre non limitatif et pour en faciliter la compréhension les orientations « axiale » suivant un axe X principal de l'unité de moulage et « radiale » orthogonalement audit axe.

On utilisera à titre non limitatif les termes « haut » ou « bas » ainsi que « supérieur » ou « inférieur » en référence à l'orientation axiale, et « extérieur » ou « intérieur » en référence à l'orientation radiale et par rapport à l'axe X.

On a représenté sur les figures 3 à 6, une unité 10 de moulage selon un mode de réalisation de l'invention donné à titre non limitatif.

L'unité 10 de moulage pour la fabrication de récipients de type « HR » est apte à équiper une machine de fabrication, notamment de conception rotative, dont l'unité 10 constitue alors l'une des unités (ou postes) qui sont réparties circonférentiellement de manière régulière autour de l'axe de rotation de la machine.

On décrira ci-après l'unité 10 de moulage selon ledit mode de réalisation de l'invention, par comparaison avec celle de l'état de la technique décrite précédemment et représentée à la figure 1, les mêmes chiffres de référence désignant les mêmes moyens.

L'unité 10 de moulage est destinée à la fabrication de récipients de type « HR », les récipients étant obtenus par soufflage ou par étirage-soufflage à partir de préformes 100 en matière plastique telles que la préforme représentée à la figure 2.

La préforme 100 comporte un col 104 muni d'un buvant 106 qui délimite circonférentiellement une ouverture 102 d'accès à l'intérieur de la préforme.

Tel que représenté sur les figures 3 à 6, l'unité 10 de moulage comporte au moins un moule 12 de type « HR » associé à une tuyère 14.

Le moule 12 comporte au moins deux demi-moules 16 qui sont montés mobiles entre au moins une position ouverte illustrée à la figure 3 et une position fermée illustrée aux figures 5 et 6.

Le moule 12 est du type « en portefeuille » et les demi-moules 16 sont montés mobiles en rotation autour d'un axe O de rotation (voir figure 3).

En position fermée, les demi-moules 16 réunis délimitent une face 18 supérieure comportant un orifice 20 débouchant dans une cavité 22 de moulage délimitée au moins par une empreinte 24 de moulage de chaque demi-moule 16.

Les demi-moules 16 sont alors accolés suivant un plan P de joint s'étendant axialement.

De préférence, l'orifice 20 comporte un lamage périphérique réalisé dans la face 18 et destiné à recevoir la collerette 108 de la préforme 100.

Dans le cas d'une fabrication de récipient de type « HR », chaque empreinte 24 de moulage est apte à être chauffée par des moyens 26 de chauffe associés que comporte ledit moule 12.

La tuyère 14 de l'unité 10 de moulage représentée partiellement sur les figures 4 à 6 comporte au moins un corps 28 de tuyère et un nez 30 de tuyère.

Le nez 30 de tuyère est monté mobile axialement par rapport audit corps 28 de tuyère entre une position relevée au-dessus du moule illustrée à la figure 4 et une position abaissée de soufflage illustrée à la figure 6.

Sur la figure 4, le moule 12 est représenté par facilité en position fermée. Toutefois, lorsque la tuyère 14 occupe ladite position relevée, le moule 12 est alors généralement en position ouverte. Le moule 12 de l'unité 10 de moulage occupe sa position ouverte lorsque par exemple il est en attente de l'introduction d'une préforme ou pour libérer un récipient fabriqué qui est extrait par des moyens de transfert (non représentés), tels qu'une pince.

En position abaissée de soufflage, le nez 30 de tuyère est en appui contre la face 18 supérieure du moule 12 occupant en position fermée.

Le nez 30 de tuyère établit alors une liaison étanche afin d'introduire par ladite ouverture 102 du col 104 de la préforme 100 au moins un fluide sous pression, généralement de l'air, à l'intérieur de la préforme 100.

De préférence, le nez 30 de tuyère comporte à son extrémité axiale inférieure des moyens 44 d'étanchéité destinés à coopérer avec la face 18 pour assurer ladite liaison étanche. Pour certaines applications, les moyens 44 d'étanchéité tels qu'un joint peuvent être en contact avec la collerette 108 de la préforme 100.

Le nez 30 de tuyère est commandé axialement en déplacement entre lesdites positions relevée et abaissée par l'intermédiaire des moyens 32 d'actionnement que comporte la tuyère 14.

De préférence les moyens 32 d'actionnement associés audit nez 30 de tuyère sont constitués par un moteur linéaire représenté sur la figure 3.

Avantageusement, le moteur 32 linéaire est électrique.

La tuyère 14 comporte avantageusement un stabilisateur 34 qui comporte principalement une face 36 d'appui destinée à coopérer avec le buvant 106 du col 104 et des moyens 38 de blocage.

Les moyens 38 de blocage sont destinés à être introduits à l'intérieur du col 104 pour immobiliser en position le récipient fabriqué, notamment lors de l'ouverture du moule 12 en vue de procéder à l'extraction dudit récipient hors du moule 12.

Le stabilisateur 34 est logé à l'intérieur du nez 30 de tuyère et forme avec un organe 40 tubulaire un équipage mobile.

L'organe 40 tubulaire, dit d'admission, est centralement creux pour permettre lors du soufflage le passage d'au moins un fluide sous pression, depuis une source de fluide sous pression alimentant l'unité 10 de moulage jusqu'à la préforme 100 à transformer en récipient.

L'organe 40 tubulaire est apte à être traversé centralement par une tige d'étirage lorsque la tuyère 14 de l'unité 10 de moulage comporte une telle tige pour réaliser la fabrication du récipient par étirage-soufflage.

Le stabilisateur 34 est entraîné axialement avec ledit nez 30 de tuyère lorsque ledit nez 30 est déplacé par les moyens d'actionnement qui sont avantageusement formés par le moteur 32 linéaire.

Le stabilisateur 34 est apte à coulisser axialement relativement audit nez 30 de tuyère entre au moins une position haute illustrée sur les figures 5 et 6 et une position basse illustrée sur la figure 4.

La position basse correspond à une position vers laquelle ledit équipage mobile, et tout particulièrement le stabilisateur 34, est rappelé élastiquement par des moyens 42 de rappel.

De préférence, les moyens 42 de rappel sont formés par au moins un ressort, tel qu'un ressort de compression, qui sollicite axialement vers le bas ledit équipage mobile formé du stabilisateur 34 et de l'organe 40 tubulaire d'admission.

Tel que représenté sur la figure 4, le stabilisateur 34 en position basse s'étend en partie en saillie par rapport au nez 30 de tuyère, les moyens 38 de blocage s'étendant notamment axialement vers le bas au-delà des moyens 44 d'étanchéité portés par le nez 30 de tuyère.

Tel que représenté sur les figures 5 et 6, le stabilisateur 34 occupe ladite position haute en présence d'une préforme 100, lorsque le stabilisateur 34 coopère avec le col 104 de la préforme 100 qui provoque le déplacement axial vers le haut du stabilisateur 34 relativement au nez 30 de tuyère, à l'encontre de l'effort de rappel exercé par le ressort 42.

Le stabilisateur 34 exerce par sa face 36 d'appui sur le buvant 106 du col 104 de la préforme 100 un effort de stabilisation qui est orienté axialement vers le bas afin de plaquer la collerette 108 de la préforme 100 contre la face 18 du moule 12, pour la maintenir axialement en position en vue du soufflage.

L'organe 40 tubulaire d'admission est guidé en coulissement axial par rapport au corps 28 de tuyère par au moins un moyen 46 de guidage qui est interposé radialement entre ledit corps 28 de tuyère et ledit organe 40 tubulaire.

Le stabilisateur 34 est fixé audit organe 40 tubulaire d'admission de sorte que, ainsi attelé ensemble, un équipage mobile soit constitué.

Avantageusement, le stabilisateur 34 est guidé par rapport au corps 28 de tuyère uniquement par l'intermédiaire dudit au moins un moyen 46 de guidage.

De préférence, ledit au moins un moyen 46 de guidage est porté par le corps 28 de tuyère. En variante, ledit au moins un moyen 46 de guidage est porté par l'organe 40 tubulaire d'admission.

Avantageusement, ledit au moins un moyen 46 de guidage porté par le corps 28 de tuyère est agencé axialement au-dessus du stabilisateur 34 de manière à protéger ledit au moins un moyen 46 de guidage en éloignant ledit au moins un moyen 46 de guidage de l'extrémité inférieure du nez 30 de tuyère où les contraintes thermiques sont les plus importantes.

Dans le mode de réalisation, ledit au moins un moyen 46 de guidage est avantageusement constitué par au moins une paire de bagues 48 de guidage, superposées axialement l'une à l'autre.

Le stabilisateur 34 présente circonférentiellement avec le nez 30 de tuyère un jeu radial déterminé qui est notamment propre à en permettre la dilatation thermique sous l'effet de la chaleur transmise par le moule 12 de type « HR » et cela afin de garantir au stabilisateur 34 une liberté de coulissement axial entre lesdites positions haute et basse, sans risque de coincement.

Par comparaison avec la figure 1 illustrant l'état de la technique, le stabilisateur 34 est libre de coulisser par rapport au corps 28 de tuyère comme par rapport au nez 30 de tuyère.

Le guidage axial du stabilisateur auparavant réalisé par coopération entre la surface 43 cylindrique externe d'un tronçon supérieur du stabilisateur avec la surface 47 cylindrique interne de guidage de la chemise 45 n'existe donc plus, la chemise 45 étant par conséquent avantageusement supprimée.

Grâce au fait que le stabilisateur 34 est guidé uniquement par ledit au moins un moyen 46 de guidage porté par le corps 28 de tuyère et coopérant avec l'organe 40 tubulaire auquel ledit stabilisateur est fixé, le stabilisateur 34 peut avantageusement être réalisé en matière plastique.

Par comparaison avec un stabilisateur en métal selon l'état de la technique, l'utilisation de matière plastique pour le stabilisateur 34 offrent de nombreux avantages.

L'utilisation de matière plastique pour le stabilisateur permet un gain de poids par rapport à un stabilisateur identique qui serait réalisé en métal comme cela était systématiquement le cas jusqu'alors dans l'état de la technique pour une application à la fabrication de récipients de type « HR ».

Avantageusement, les dimensions du stabilisateur 34 peuvent être optimisées pour réduire les volumes morts à l'intérieur du nez 30 de tuyère, l'allégement obtenu à la faveur du changement pour la matière plastique le permettant là où, par comparaison, cela aurait été rédhibitoire pour le fonctionnement avec du métal.

Grâce à l'allègement obtenu par l'emploi de matière plastique pour réaliser le stabilisateur 34, les cadences sont avantageusement augmentées.

La réduction de la masse embarquée permet d'augmenter la vitesse de déplacement du nez 30 de tuyère entre les positions relevée et abaissée.

L'utilisation d'un moteur 32 linéaire pour l'entrainement du nez 30 de tuyère participe également à l'obtention de cadences plus élevées, notamment en raison des accélérations propres à un tel moteur.

Avantageusement, le moteur 32 linéaire permet de réaliser une décélération en fin de course ce qui réduit l'énergie cinétique dissipée lors de l'accostage entre le stabilisateur 34 en matière plastique et le col 104 de la préforme 100.

Avantageusement et par comparaison avec un matériau métallique, l'utilisation d'un stabilisateur 34 en matière plastique permet de limiter les détériorations susceptibles d'être faites au col 104 de la préforme 100.

De préférence, le stabilisateur 34 est fixé de manière démontable à l'organe 40 tubulaire d'admission par l'intermédiaire de moyens 50 de fixation constitués par au moins un élément déformable élastiquement.

Avantageusement, ledit au moins un élément déformable élastiquement formant les moyens 50 de fixation du stabilisateur 34 avec l'organe 40 tubulaire d'admission est un jonc annulaire.

De préférence, le jonc 50 annulaire est porté par le stabilisateur 34 et est reçu dans une gorge 52 annulaire complémentaire de l'organe 40 tubulaire.

Avantageusement, la tuyère 14 comporte des moyens 42 de rappel du stabilisateur 34 vers la position basse qui sont agencés axialement au-dessus dudit au moins un moyen 46 de guidage.

Grâce à un tel agencement et par comparaison avec l'état de la technique, les moyens 42 de rappel du stabilisateur 34 sont avantageusement mieux préservés des contraintes thermiques qui existaient jusqu'alors, en raison notamment du transfert de chaleur survenant entre le moule 12 et le nez 30 de tuyère lors de la fabrication de récipients de type « HR ».

De préférence, les moyens 42 de rappel sont constitués par un ressort de compression dont l'extrémité supérieure est axialement en appui sur une face 54 radiale d'appui du corps 28 de tuyère.

De préférence, l'extrémité inférieure du ressort 42 de compression constituant les moyens de rappel est axialement en appui sur une face 56 radiale d'appui.

Avantageusement, ladite face 56 radiale d'appui du ressort 42 appartient à une collerette 58 annulaire qui est solidaire de l'organe 40 tubulaire d'admission.

Les moyens 42 de rappel sollicitent axialement le stabilisateur 34 vers la position basse, sans toutefois être directement en contact avec le stabilisateur 34 ce qui est avantageux lorsque ledit stabilisateur 34 est réalisé en matière plastique.

De préférence, une bague 60 d'appui est interposée axialement entre l'extrémité supérieure dudit ressort 42 et ladite face 54 radiale d'appui du corps 28 de tuyère et/ou entre l'extrémité inférieure du ressort 42 et ladite face 56 radiale d'appui portée par la collerette 58 annulaire de l'organe 40 tubulaire.

La tuyère 14 comporte des moyens de butée déterminant axialement au moins l'une desdites positions basse et haute de l'équipage mobile formé par le stabilisateur 34 et l'organe 40 tubulaire.

Avantageusement, la tuyère 14 comporte des moyens 62 de butée qui, déterminant la position basse, sont constitués par une face 64 de butée que comporte le nez 30 de tuyère et contre laquelle vient buter un épaulement 66 du stabilisateur 34.

De préférence, un élément 68 déformable élastiquement est interposé axialement entre ledit épaulement 66 du stabilisateur et la face 64 de butée portée par le nez 30 de tuyère.

Le fonctionnement de l'unité 10 de moulage est illustré par les figures 4 à 6.

Sur la figure 4, la tuyère 14 est en position relevée et le moule 12 est, en l'absence préforme 100, en position ouverte. Une préforme 100 est ensuite amenée par des moyens de transfert (non représentés), tels qu'une pince, et introduite dans le moule 12 dont les demi-moules 16 sont déplacés vers la position fermée.

Simultanément, les moyens 32 d'actionnement sont commandés pour provoquer la descente du nez 30 de tuyère qui quitte la position relevée pour se diriger vers la position abaissée.

Lors de la descente, le stabilisateur 34 en saillie va alors entrer en contact avec le col 104 de la préforme 100, les moyens 38 de blocage pénètrent par l'ouverture 102 à l'intérieur du col 104 de la préforme 100.

Tel qu'illustré par la figure 5, le stabilisateur 34 coopère ensuite par sa face 36 d'appui avec le buvant 106 de la préforme 100. La préforme 100 étant en appui par sa collerette 108 contre la face 18 du moule entourant l'orifice 20, le stabilisateur 34 est axialement bloqué de sorte que la poursuite de la descente du nez 30 de tuyère s'accompagne d'un coulissement du stabilisateur 34 relativement au nez 30 de tuyère.

La descente du nez 30 de tuyère s'achève lorsqu'est atteinte la position abaissée de soufflage représentée à la figure 6, le joint 44 étant en appui contre la face 18 du moule 12.

Le stabilisateur 34 occupe alors sa position haute dans laquelle le stabilisateur 34, sollicité axialement vers le bas par le ressort 42 agissant sur la collerette 58 de l'organe 40 tubulaire, applique sur le col 104 de la préforme 100 un effort propre à la maintenir dans une position axiale déterminée en vue de sa transformation en récipient.

## Revendications

1. Unité (10) de moulage pour la fabrication de récipients par soufflage ou par étirage-soufflage à partir de préformes (100) en matière plastique comportant un col (104) muni d'un buvant (106) délimitant circonférentiellement une ouverture (102) d'accès à l'intérieur de ladite préforme (100), ladite unité (10) de moulage comportant au moins :
- un moule (12) de type « HR » comportant au moins deux demi-moules (16) montés mobiles entre au moins une position ouverte et une position fermée dans laquelle les demi-moules (16) réunis délimitent une face (18) supérieure comportant un orifice (20) débouchant dans une cavité (22) de moulage délimitée au moins par une empreinte (24) de moulage de chaque demi-moule, chaque empreinte (24) de moulage étant apte à être chauffée par des moyens (26) de chauffe associés dudit moule (12),
- une tuyère (14) comportant au moins un corps (28) de tuyère et un nez (30) de tuyère qui est monté mobile axialement par rapport audit corps (28) de tuyère entre une position relevée au-dessus du moule (12) et une position abaissée de soufflage, ledit nez (30) de tuyère étant commandé axialement en déplacement entre lesdites positions relevée et abaissée par des moyens (32) d'actionnement, et
- un stabilisateur (34) comportant une face (36) d'appui destinée à coopérer avec le buvant (106) du col (104) et des moyens (38) de blocage en position destinés à être introduits à l'intérieur du col (104), ledit stabilisateur (34) étant logé à l'intérieur du nez (30) de tuyère et formant avec un organe (40) tubulaire d'admission d'au moins un fluide sous pression un équipage mobile qui, mû avec ledit nez (30) de tuyère, est apte à coulisser axialement relativement audit nez (30) de tuyère entre au moins une position haute et une position basse,
**caractérisée en ce que** l'organe (40) tubulaire est guidé en coulissement axial par rapport au corps (28) de tuyère par au moins un moyen (46) de guidage qui est interposé radialement entre ledit corps (28) de tuyère et ledit organe (40) tubulaire d'admission et **en ce que** le stabilisateur (34), fixé audit organe (40) tubulaire, est guidé par rapport au corps (28) de tuyère uniquement par l'intermédiaire dudit au moins un moyen (46) de guidage.

2. Unité selon la revendication 1, **caractérisée en ce que** ledit stabilisateur (34) est réalisé en matière plastique.

3. Unité selon la revendication 1 ou 2, **caractérisée en ce que** les moyens (32) d'actionnement associés audit nez (30) de tuyère sont constitués par un moteur linéaire.

4. Unité selon l'une quelconque des revendications 1 à 3, **caractérisée en ce que** ledit au moins un moyen (46) de guidage est porté par le corps (28) de tuyère.

5. Unité selon l'une quelconque des revendications 1 à 4, **caractérisée en ce que** ledit au moins un moyen (46) de guidage est constitué par au moins une paire de bagues (48) de guidage, superposées axialement l'une à l'autre.

6. Unité selon l'une quelconque des revendications 1 à 5, **caractérisée en ce que** le stabilisateur (34) est fixé de manière démontable à l'organe (40) tubulaire d'admission par l'intermédiaire de moyens (50) de fixation constitués par au moins un élément déformable élastiquement.

7. Unité selon l'une quelconque des revendications 1 à 6, **caractérisée en ce que** la tuyère (14) comporte des moyens (42) de rappel du stabilisateur (34) vers la position basse qui sont agencés axialement au-dessus dudit au moins un moyen (46) de guidage.

8. Unité selon la revendication 7, **caractérisée en ce que** les moyens (42) de rappel sont constitués par un ressort de compression dont l'extrémité supérieure est axialement en appui sur une face (54) radiale d'appui du corps (28) de tuyère.

9. Unité selon l'une des revendications 7 ou 8, **caractérisée en ce que** les moyens (42) de rappel sont constitués par un ressort de compression dont l'extrémité inférieure est axialement en appui sur une face (56) radiale d'appui que comporte une collerette (58) annulaire qui est solidaire de l'organe (40) tubulaire d'admission.

10. Unité selon l'une quelconque des revendications 1 à 9, **caractérisée en ce que** la tuyère (14) comporte au moins des moyens (62) de butée qui, déterminant la position basse, sont constitués par une face (64) de butée que comporte le nez (30) de tuyère et contre laquelle vient buter un épaulement (66) du stabilisateur (34).

## Patentansprüche

1. Formeinheit (10) zur Herstellung von Behältern durch Blasen oder Streckblasen aus Vorformlingen (100) aus Kunststoffmaterial, umfassend einen Hals (104), der mit einem Mündungsrand (106) versehen ist, der eine Zugangsöffnung (102) zum Inneren des Vorformlings (100) umfangsmäßig begrenzt, die Formeinheit (10) mindestens umfassend:
- eine Form (12) des "HR"-Typs, umfassend mindestens zwei Formhälften (16), die zwischen mindestens einer offenen Position und einer geschlossenen Position beweglich angebracht sind, in der die zusammengeführten Formhälften (16) eine obere Fläche (18) begrenzen, die eine Öffnung (20) aufweist, die in einen Hohlraum (22) zum Formen mündet, der mindestens von einem Formnest (24) jeder Formhälfte begrenzt wird, wobei jedes Formnest (24) in der Lage ist, von zugehörigen Heizmitteln (26) der Form (12) erhitzt zu werden,
- eine Düse (14), umfassend mindestens einen Düsenkörper (28) und ein Düsenmundstück (30), das axial bezogen auf den Düsenkörper (28) zwischen einer angehobenen Position über der Form (12) und einer abgesenkten Blasposition beweglich angebracht ist, wobei das Düsenmundstück (30) durch Betätigungsmittel (32) axialbeweglich zwischen der angehobenen und der abgesenkten Position gesteuert wird, und
- einen Stabilisator (34), umfassend eine Stützseite (36), die dazu bestimmt ist, mit dem Mündungsrand (106) des Halses (104) und Lagefixiermitteln (38) zusammenzuwirken, die dazu bestimmt sind, in das Innere des Halses (104) eingeführt zu werden, wobei der Stabilisator (34) innerhalb des Düsenmundstücks (30) aufgenommen ist und mit einem rohrförmigen Element (40) zum Einlass mindestens eines unter Druck stehenden Fluids eine bewegliche Ausrüstung bildet, die bezogen auf das Düsenmundstück (30) zwischen mindestens einer oberen Position und einer unteren Position axial verschiebbar ist, wenn sie mit dem Düsenmundstück (30) bewegt wird,
**dadurch gekennzeichnet, dass** das rohrförmige Element (40) bezogen auf den Düsenkörper (28) durch mindestens ein Führungsmittel (46) axial verschiebbar geführt wird, das radial zwischen dem Düsenkörper (28) und dem rohrförmigen Element (40) zum Einlass angeordnet ist, und dadurch, dass der Stabilisator (34), der an dem rohrförmigen Element (40) befestigt ist, bezogen auf den Düsenkörper (28) nur mithilfe des mindestens einen Führungsmittels (46) geführt wird.

2. Einheit nach Anspruch 1, **dadurch gekennzeichnet, dass** der Stabilisator (34) aus Kunststoffmaterial hergestellt ist.

3. Einheit nach Anspruch 1 oder 2, **dadurch gekennzeichnet, dass** die Betätigungsmittel (32), die zu dem Düsenmundstück (30) gehören, von einem Linearmotor gebildet sind.

4. Einheit nach einem der Ansprüche 1 bis 3, **dadurch gekennzeichnet, dass** das mindestens eine Führungsmittel (46) von dem Düsenkörper (28) getragen wird.

5. Einheit nach einem der Ansprüche 1 bis 4, **dadurch gekennzeichnet, dass** das mindestens eine Führungsmittel (46) von mindestens einem Paar Führungsringe (48) gebildet wird, die axial übereinander angeordnet sind.

6. Einheit nach einem der Ansprüche 1 bis 5, **dadurch gekennzeichnet, dass** der Stabilisator (34) mithilfe von Befestigungsmitteln (50), die von mindestens einem elastisch verformbaren Element gebildet sind, abnehmbar an dem rohrförmigen Element (40) zum Einlass befestigt ist.

7. Einheit nach einem der Ansprüche 1 bis 6, **dadurch gekennzeichnet, dass** die Düse (14) Mittel (42) zum Rückführen des Stabilisators (34) hin zu der unteren Position umfasst, die axial über dem mindestens einen Führungsmittel (46) angeordnet sind.

8. Einheit nach Anspruch 7, **dadurch gekennzeichnet, dass** die Mittel (42) zum Rückführen von einer Druckfeder gebildet sind, deren oberes Ende axial an einer radialen Anlagefläche (54) des Düsenkörpers (28) anliegt.

9. Einheit nach einem der Ansprüche 7 oder 8, **dadurch gekennzeichnet, dass** die Mittel (42) zum Rückführen von einer Druckfeder gebildet sind, deren unteres Ende axial an einer radialen Anlagefläche (56) anliegt, die ein ringförmiger Kragen (58) umfasst, der mit dem rohrförmigen Element (40) zum Einlass fest verbunden ist.

10. Einheit nach einem der Ansprüche 1 bis 9, **dadurch gekennzeichnet, dass** die Düse (14) zumindest Anschlagmittel (62) umfasst, die von einer Anschlagfläche (64) gebildet sind, die das Düsenmundstück (30) umfasst, und gegen die ein Absatz (66) des Stabilisators (34) zum Anschlag kommt, wobei die untere Position bestimmt wird.

## Claims

1. Moulding unit (10) for the manufacture of containers by blow-moulding or stretch-blow-moulding from plastic preforms (100) comprising a neck (104) provided with a lip (106) circumferentially delimiting an opening (102) providing access to the inside of the said preform (100), the said moulding unit (10) comprising at least:
- a mould (12) of "HR" type comprising at least two half-moulds (16) mounted with the ability to move between at least an open position and a closed position in which the half-moulds (16) brought together delimit an upper face (18) comprising an orifice (20) opening into a moulding cavity (22) delimited by at least one moulding impression (24) of each half-mould, each moulding impression (24) being able to be heated by heating means (26) associated with the said mould (12),
- a nozzle (14) comprising at least a nozzle body (28) and a nozzle tip (30) which is mounted with the ability to move axially with respect to the said nozzle body (28) between a raised position above the mould (12) and a lowered blowing position, the said nozzle tip (30) being commanded in its axial movement between the said raised and lowered positions by actuating means (32), and
- a stabilizer (34) comprising a bearing face (36) intended to collaborate with the lip (106) of the neck (104) and position-blocking means (38) intended to be introduced into the neck (104), the said stabilizer (34) being housed inside the nozzle tip (30) and forming, with a tubular member (40) that admits at least one pressurized fluid, moving equipment which, moved with the said nozzle tip (30), is able to slide axially relative to said nozzle tip (30) between at least a high position and a low position,
**characterized in that** the tubular member (40) is guided in axial sliding with respect to the nozzle body (28) by at least one guide means (46) which is interposed radially between the said nozzle body (28) and the said tubular admission member (40) and **in that** the stabilizer (34), fixed to the said tubular member (40), is guided with respect to the nozzle body (28) only by means of the said at least one guide means (46).

2. Unit according to Claim 1, **characterized in that** the said stabilizer (34) is made of plastic.

3. Unit according to Claim 1 or 2, **characterized in that** the actuating means (32) associated with the said nozzle tip (30) consist of a linear motor.

4. Unit according to any one of Claims 1 to 3, **characterized in that** the said at least one guide means (46) is borne by the nozzle body (28).

5. Unit according to any one of Claims 1 to 4, **characterized in that** the said at least one guide means (46) consists of at least one pair of guide rings (48) superposed axially with one another.

6. Unit according to any one of Claims 1 to 5, **characterized in that** the stabilizer (34) is fixed removably to the tubular admission member (40) via fixing means (50) consisting of at least one elastically deformable element.

7. Unit according to any one of Claims 1 to 6, **characterized in that** the nozzle (14) comprises return means (42) for returning the stabilizer (34) towards the low position and which are arranged axially above the said at least one guide means (46) .

8. Unit according to Claim 7, **characterized in that** the return means (42) consist of a compression spring the upper end of which bears axially against a radial bearing face (54) of the nozzle body (28).

9. Unit according to one of Claims 7 and 8, **characterized in that** the return means (42) consist of a compression spring the lower end of which bears axially on a radial bearing face (56) that an annular flange (58) secured to the tubular admission member (40) comprises.

10. Unit according to any one of Claims 1 to 9, **characterized in that** the nozzle (14) comprises at least abutment means (62) which, determining the low position, consist of an abutment face (64) that the nozzle tip (30) comprises and against which a shoulder (66) of the stabilizer (34) butts.
